# EUROPÄISCHE PATENTSCHRIFT

(11) **EP 0 713 459 B1**
(45) Veröffentlichungstag und Bekanntmachung des Hinweises auf die Patenterteilung: **11.11.1998**
(21) Anmeldenummer: 95924889.9
(22) Anmeldetag: 21.06.1995
(51) Int. Cl.: B60R 22/46, F01C 21/08

(54) **ANTRIEBSVORRICHTUNG FÜR EINEN GURTSTRAFFER**
BELT RETRACTOR DRIVE
DISPOSITIF D'ENTRAINEMENT POUR ORGANE DE RETRACTION DE CEINTURE DE SECURITE

(30) Priorität: 22.06.1994 DE 4421758
(43) Veröffentlichungstag der Anmeldung: 29.05.1996
(73) Patentinhaber: FÖHL, Artur, 73614 Schorndorf (DE)
(72) Erfinder: FÖHL, Artur, 73614 Schorndorf (DE)
(74) Vertreter: Degwert, Hartmut, Dipl.-Phys.
(86) Internationale Anmeldenummer: EP9502398
(87) Internationale Veröffentlichungsnummer: WO9535227

(56) Entgegenhaltungen:
- EP-A- 0 424 104
- EP-A- 0 648 652
- DD-A- 96 755
- DE-A- 2 512 433
- DE-A- 2 535 380
- DE-A- 2 544 232
- DE-C- 2 814 487
- DE-U- 9 415 157
- FR-A- 2 467 970
- US-A- 1 539 728
- PATENT ABSTRACTS OF JAPAN vol. 7, no. 223 (M-247) 4. Oktober 1983 & JP,A,58 117 382 (MATSUSHITA DENKI SANGYO KK) 12. Juli 1983

## Beschreibung

Die Erfindung betrifft eine Antriebsvorrichtung für einen an der Gurtspule eines Gurtaufrollers angreifenden Gurtstraffer, mit einem seitlich an den Gurtaufroller angebauten Gehäuse, in dem ein Zylinderraum gebildet ist, einem exzentrisch in diesem gelagerten, allgemein kreisscheibenförmigen Rotor mit in radialen Schlitzen aufgenommenen Lamellen und einer fahrzeugsensitiv aktivierbaren Druckgasquelle zur Druckbeaufschlagung der zwischen den Lamellen, dem Rotor und der Wandung des Gehäuses gebildeten Kammern über einen Ein-laß.

Eine Antriebsvorrichtung dieser Art ist bereits aus der DE-PS 28 14 487 bekannt. Da der Rotor dieser Antriebsvorrichtung, die als Lamellenmotor bezeichnet werden kann, direkt an die Gurtspule des Gurtaufrollers angekoppelt werden kann, ergibt sich eine gute Ausnutzung der von der Druckgasquelle zur Verfügung gestellten Energie im Vergleich zu anderen Bauformen von Gurtstrafferantrieben, bei denen eine Linearbewegung erst in eine Drehbewegung umgesetzt werden muß. Die Druckgasquelle, ein pyrotechnischer Gasgenerator, beaufschlagt bei der bekannten Antriebsvorrichtung die zwischen den Lamellen des Rotors gebildeten Kammern jedoch nicht direkt, sondern mittels eines flüssigen Arbeitsmediums wie Wasser, da es nicht gelungen ist, den Rotor im Gehäuse ausreichend abzudichten. Bei herkömmlichen Lamellenmotoren werden die Lamellen durch Druckfedern radial auswärts in Dichteingriff mit der Gehäusewandung gehalten. Bei zunehmender Drehzahl des Rotors werden die Lamellen zusätzlich durch Fliehkraft gegen die Gehäusewandung gedrückt. Bei einer Antriebsvorrichtung für Gurtstraffer muß jedoch der Rotor innerhalb von nur etwa 6 bis 10 ms 1 bis 2, vorzugsweise etwa 1,5, Umdrehungen ausführen, was einer mittleren Drehzahl von etwa 10.000 bis 20.000 U/min entspricht. Bei dem hierzu benötigten plötzlichen Druckanstieg nach Aktivierung des Gasgenerators werden die Lamellen an ihren äußeren Endflächen, mit denen sie an der Gehäusewandung abdichten sollen, druckbeaufschlagt, wodurch auch stark dimensionierte Federn, welche die Lamellen in Dichteingriff mit der Gehäusewandung halten sollen, überwunden werden, so daß letztlich keine oder eine nur unzureichende Abdichtung erfolgt und die Gase am Auslaß des Gehäuses austreten, ohne Arbeit verrichtet zu haben. Durch die Zwischenschaltung eines fluiden Arbeitsmediums wie Wasser wird zwar eine bessere Umsetzung der von dem Gasgenerator freigesetzten Energie in mechanische Antriebsarbeit erreicht, da wegen der im Vergleich zu Gasen hohen Viskosität des Mediums die Leckverluste am Rotor weniger ins Gewicht fallen, jedoch ist die Verwendung eines solchen Mediums aus mehreren Gründen problematisch. Zum einen muß das fluide Arbeitsmedium in einem gut abgedichteten Vorratsraum untergebracht und ständig bereitgehalten werden, wodurch eine aufwendige Konstruktion mit erhöhtem Volumen und Gewicht bedingt wird. Zum anderen müssen Maßnahmen getroffen werden, um Beeinträchtigungen durch das bei Aktivierung des Strafferantriebs am Auslaß des Gehäuses ausgestoßene Arbeitsmedium zu verhindern.

FR-A-2 467 970 beschreibt einen Lamellenrotor, dessen Schlitze, die die Lamellen aufnehmen, an ihrem inneren Ende durch Strömungskanäle mit der druckbeaufschlagten Kammer verbunden sind. EP-A-0 648 652 beschreibt auch solch einen Lamellenrotor, wobei aber mehrere Triebladungen nacheinander gezündet werden.

Durch die Erfindung wird eine Antriebsvorrichtung von der Art eines Lamellenmotors zur Verfügung gestellt, die ohne ein flüssiges Arbeitsmedium auskommt und dennoch eine optimale Umsetzung der vom Gasgenerator freigesetzten Energie in mechanische Antriebsarbeit gewährleistet. Gemäß der Erfindung sind die radialen Schlitze des Rotors, in denen die Lamellen geführt sind, jeweils an ihrem inneren Ende durch einen Strömungskanal mit einer in Drehrichtung des Rotors vor der entsprechenden Lamelle gelegenen Kammer verbunden. Durch diesen Strömungskanal erfolgt ein Druckausgleich zwischen der druckbeaufschlagten Kammer und dem radial inneren Ende jedes Schlitzes, so daß die durch Druckbeaufschlagung erzeugten radialen Kräfte an jeder Lamelle einander zumindest kompensieren. Es muß nun lediglich gewährleistet werden, daß die Lamellen zu Beginn der Druckbeaufschlagung entweder bereits in Dichteingriff mit der Gehäusewandung stehen oder aber innerhalb einer extrem kurzen Zeitspanne mit der Gehäusewandung in Dichteingriff gebracht werden. Dies ist für einen Lamellenrotor mit Kupplung nach dem kennzeichnenden Teil des unabhängigen Anspruchs 1 und für einen Lamellenrotor ohne Kupplung nach dem kennzeichnenden Teil des unabhängigen Anspruchs 7 erreicht.

Gemäß einer ersten Ausführungsform, bei welcher der Rotor durch eine Kupplung an die Gurtspule ankoppelbar ist, wird diejenige Lamelle, welche die einlaßseitige Kammer in Drehrichtung des Rotors an ihrem vorderen Ende abschließt, durch ein erst bei wesentlich angestiegenem Druck nachgebendes Haltemittel an ihrem radial äußeren Ende in Dichteingriff mit der Wandung des Gehäuses gehalten. Durch diese Maßnahme wird erreicht, daß der Dichteingriff auch dann erhalten bleibt, wenn bei Aktivierung des Gasgenerators ein Differenzdruck zwischen der druckbeaufschlagten Kammer und den radial inneren Enden der Rotorschlitze auftritt, wenn noch kein vollständiger Druckausgleich durch die Strömungskanäle im Rotor zustande gekommen ist. Erst wenn bereits ein wesentlicher Druck von beispielsweise 10 % des Maximaldrucks erreicht ist, wird das Haltemittel, beispielsweise ein Scherstift, überwunden; zu diesem Zeitpunkt ist erfahrungsgemäß ein Druckausgleich über die Strömungskanäle erfolgt, so daß keine durch die Druckbeaufschlagung bedingten radialen Differenzkräfte an den Lamellen auftreten.

Bei einer zweiten Ausführungsform ist der Rotor mit der Gurtspule drehfest gekoppelt, so daß eine Kupplung entfallen kann. Die Lamellen weisen an ihrem radial inneren Ende jeweils eine größere durch den Gasdruck beaufschlagbare Fläche als an ihrem radial äußeren Ende auf. Bei Druckbeaufschlagung der radial inneren und äußeren Endflächen der Lamellen entsteht folglich eine Differenzkraft, die radial nach außen gerichtet ist und die Lamellen positiv in Dichteingriff mit der Gehäusewandung bringt. Um zu gewährleisten, daß bereits zu Beginn der Druckbeaufschlagung, wenn noch kein vollständiger Druckausgleich über die Strömungskanäle im Rotor erfolgt ist, die gewünschten Differenzkräfte an den Lamellen aufgebaut werden, ist bei einer bevorzugten Weiterbildung dieser Ausführungsform im Strömungsweg zwischen dem Einlaß und dem diesem annähernd diametral gegenüberliegenden Auslaß im Gehäuse ein Staukörper angeordnet, der erst bei wesentlich angestiegenem Druck nachgibt und den Strömungsweg freigibt. Dieser Staukörper kann durch eine den Auslaß verschließende Berstscheibe oder durch ein Füllteil aus einem verformbaren Material in derjenigen Kammer, die in Drehrichtung des Rotors hinter der dem Einlaß benachbarten Kammer liegt, gebildet sein. Damit die Drehung der Gurtspule in keiner Weise behindert wird, sind die Lamellen im Ruhezustand des Rotors radial in die Schlitze eingezogen und stehen über den Außenumfang des Rotors nicht hinaus, so daß sie mit der Gehäusewandung nicht in Berührung kommen. In dieser eingezogenen Stellung sind die Lamellen vorzugsweise am Rotor lösbar befestigt, z. B. mittels eines Klebers.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1 eine erste Ausführungsform der Antriebsvorrichtung im Schnitt durch den Rotor;
- Fig. 2 eine Schnittansicht entlang Linie II-II in Fig. 1;
- Fig. 3 eine zweite Ausführungsform der Antriebsvorrichtung im Schnitt durch den Rotor;
- Fig. 4 eine Perspektivansicht des Rotors bei der Ausführungsform nach Fig. 3;
- Fig. 5 eine Schnittansicht einer weiteren Ausführungsform der Antriebsvorrichtung;
- Fig. 6 eine Perspektivansicht des Rotors bei der Ausführungsform nach Fig. 5;
- Fig. 7 eine Explosionsansicht einer weiteren Ausführungsform der Antriebsvorrichtung mit Gurtaufroller;
- Fig. 8 eine Schnittansicht einer Variante der Ausführungsform nach Fig. 5;
- Fig. 9 eine Perspektivansicht einer einzelnen Lamelle;
- Fig. 9a eine besondere Ausführungsform einer Lamelle;
- Fig. 10 eine Seitenansicht des Rotors bei einer weiteren Ausführungsform der Antriebsvorrichtung;
- Fig. 11 eine Schnittansicht entlang Linie XI-XI in Fig. 10;
- Fig. 12 eine Detailschnittansicht aus Fig. 10 entlang Linie XII-XII; und
- Fig. 13 eine perspektivische Teilansicht eines Rotors mit axialer Lippendichtung.

Bei allen beschriebenen Ausführungsformen ist die Antriebsvorrichtung mit einem seitlich an einen Gurtaufroller 10 angebauten Gehäuse 12 versehen, in dem ein Zylinderraum 14 gebildet ist. In dem Zylinderraum 14 ist ein scheibenförmiger Rotor 16 exzentrisch angeordnet und drehbar gelagert. Der Rotor 16 ist mit mehreren radialen Schlitzen 18 versehen, in denen jeweils eine Lamelle 20 verschiebbar aufgenommen ist.

Jeder dieser Schlitze 18 steht an seinem radial inneren Ende 18a über einen Strömungskanal 22 mit dem Zylinderraum 14 in Verbindung.

In den Hohlraum eines quaderförmigen Ansatzes 24 am Gehäuse 12 ist ein pyrotechnischer Gasgenerator 26 eingesetzt, der mit einem elektrischen Zünder versehen ist. Über einen Kanal 27 im Inneren des Gehäuses 12 steht der Innenraum des hohlzylindrischen Ansatzes 24 am Gehäuse 12 mit dem Zylinderraum 14 in Verbindung. Der Kanal 27 bildet an seinem Übergang in den Zylinderraum 14 einen Einlaß 28, dem ein Auslaß 30 im Gehäuse 12 annähernd diametral gegenüberliegt.

Zwischen dem Rotor 16, den Lamellen 20 und der Wandung des Zylinderraums 14 sind wie bei einem üblichen Lamellenmotor druckbeaufschlagbare Arbeitskammern gebildet, die wegen der exzentrischen Anordnung des Rotors 16 insgesamt sichelförmig sind.

Diejenige Lamelle 20a, welche die einlaßseitige Kammer 32 in Drehrichtung des Rotors 16 an ihrem vorderen Ende abschließt, ist durch einen Scherstift 34 am Gehäuse 12 in einer ausgefahrenen Stellung fixiert, bei welcher ihr radial äußeres Ende mit der Wandung des Gehäuses 12 in Dichteingriff steht. Da der Rotor 16 somit drehfest am Gehäuse 12 gehalten ist, ist eine Kupplung, z. B. eine Klemmrollenkupplung 36, vorgesehen, um den Rotor 16 bei Aktivierung der Antriebsvorrichtung an einen seitlichen Kupplungsfortsatz 38 der Gurtspule des Gurtaufrollers 10 anzukoppeln.

Bei Zündung des Gasgenerators 26 werden die von diesem erzeugten Gase durch den Kanal 27 und Einlaß 28 zunächst in die Kammer 32 eingeleitet, wo sich ein hoher Druck aufbaut. Über den Strömungskanal 22 erfolgt ein Druckausgleich zum radial inneren Ende 18a des betreffenden Schlitzes, in dem die Lamelle 20a aufgenommen ist. Erst wenn bereits ein wesentlicher Druck von beispielsweise 10 % des Maximalwerts in der Kammer 32 aufgebaut ist, gibt der Scherstift 34 nach, so daS der Rotor 16 plötzlich in Drehung versetzt wird. Durch die sich nun aufbauenden Fliehkräfte werden die Lamellen 20 in Dichteingriff mit der Wandung des Zylinderraums 14 gehalten. Durch die beginnende Drehbewegung des Rotors 16 wird zugleich die Kupplung 36 eingerückt und die Gurtspule des Gurtaufrollers 10 drehfest mit dem Rotor 16 verbunden. Der Rotor 16 führt nun die zur Straffung des Gurtbandes erforderliche Drehung um 1 bis 2 Umdrehungen, vorzugsweise etwa 1,5 Umdrehungen, innerhalb einer Zeitspanne von nur etwa 6 bis 10 ms aus.

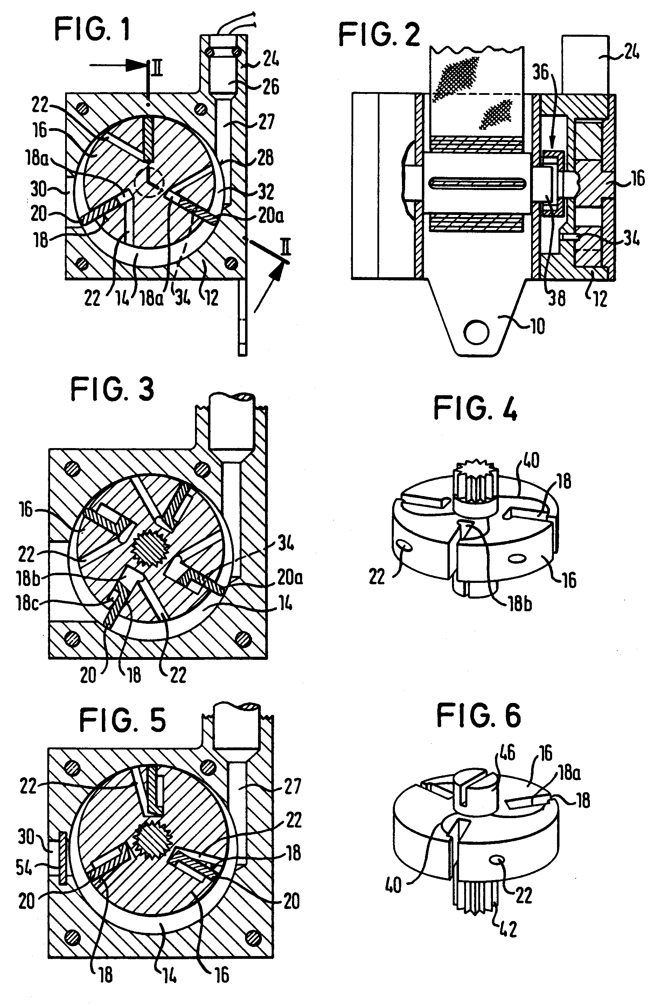

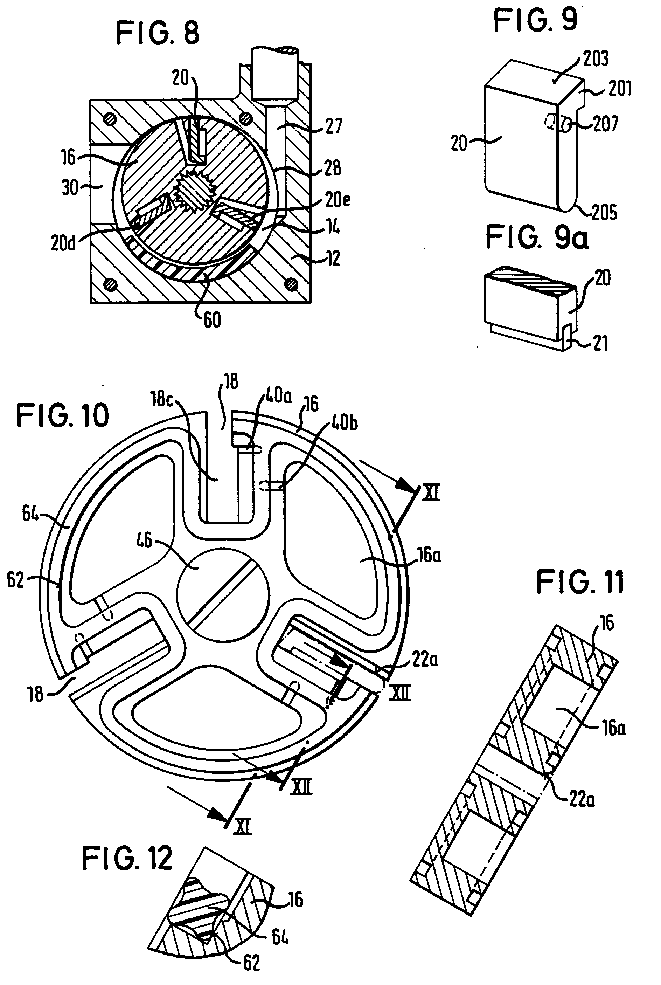

Die Anzahl der Lamellen kann größer sein als drei und beträgt beispielsweise vier, wie bei der in Fig. 3 gezeigten Ausführungsform. Eine weitere Besonderheit dieser Ausführungsform besteht darin, daß die Lamellen 20 jeweils an ihrem radial inneren Ende eine größere Dicke als am radial äußeren Ende aufweisen, wie in Fig. 9 gezeigt, und somit über eine größere druckbeaufschlagbare Fläche verfügen. Entsprechend sind die Schlitze 18 im Inneren des Rotors 16 erweitert und bilden einen Druckbeaufschlagungsraum 18b, in den jeweils ein durch den Körper des Rotors 16 geführter Strömungskanal 22 ausmündet. Bei eingezogener Lamelle 20 ist zwischen ihrem verdickten, radial inneren Ende und der radial äußeren Begrenzungsfläche des Schlitzes 18 ein schmaler Raum 18c gebildet, in dem bei Auswärtsbewegung der Lamelle 20 ein Staudruck entsteht, der die Weiterbewegung der Lamelle behindert. Daher ist dieser Raum 18c durch eine Ausgleichsnut 40 in der Seitenfläche des Rotors 16 mit dem Rotorlagerbereich verbunden.

Auch bei der Ausführungsform nach den Figuren 3 und 4 ist eine der Lamellen, die Lamelle 20a, welche die einlaßseitige Kammer 32 abschließt, mittels eines Scherstifts 34 am Gehäuse 12 festgelegt. Die Arbeitsweise unterscheidet sich von der bei der Ausführungsform nach den Figuren 1 und 2 nur durch die zur Optimierung des Dichteingriffs der Lamellen an der Wandung des Zylinderraums 14 genutzte Differenzkraft aufgrund der verschieden großen druckbeaufschlagten Endflächen an den Lamellen.

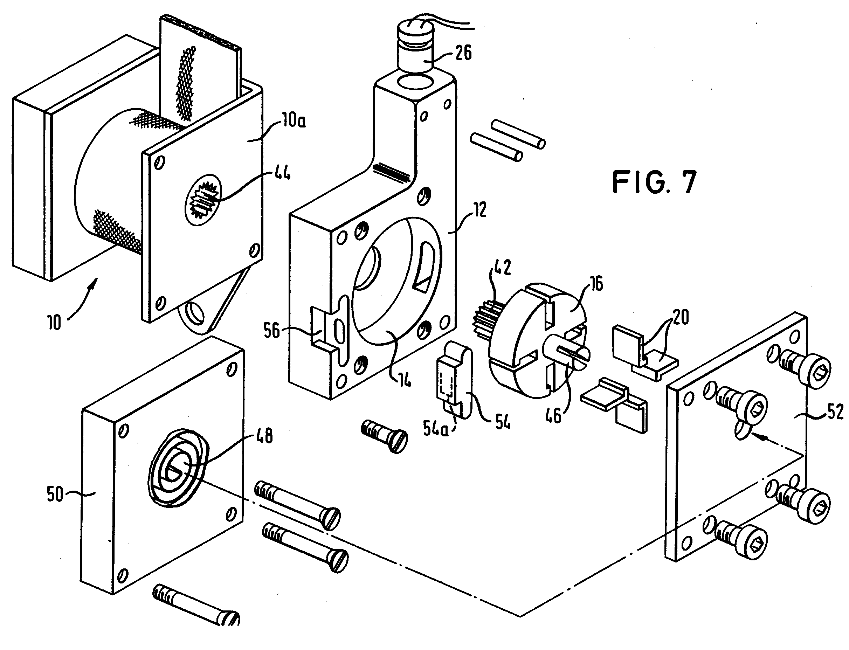

Bei der Ausführungsform nach den Figuren 5 und 6 sind die Lamellen 20 vollständig in die Schlitze 18 eingezogen, wobei sie über den Umfang des Rotors 16 nicht hinausstehen. Sie sind ohne Berührung mit der Wandung des Gehäuses 12, so daß der Rotor 16 unbehindert drehbar ist. Bei dieser Ausführungsform ist der Rotor 16 unmittelbar mit der Gurtspule des Gurtaufrollers 10 drehfest verbunden. Wie aus den Figuren 6 und 7 ersichtlich ist, besitzt der Rotor 16 auf seiner einen Seite einen Zapfen 42 mit einer Kerbverzahnung zur Formschlußverbindung mit einem eine entsprechende Verzahnung aufweisenden Anschlußfortsatz 44 an der Gurtspule des Gurtaufrollers 10 sowie einen Zapfen 46 auf der gegenüberliegenden Seite für den Anschluß des inneren Endes einer Spiralfeder 48, welche die Aufrollerfeder des Gurtaufrollers 10 bildet. Das Gehäuse 12 der Antriebsvorrichtung ist zwischen einer Seitenplatte 10a des Gurtaufrollers und einer Kassette 50 angeordnet, in welcher die Spiralfeder 48 aufgenommen ist. Eine Deckelplatte 52 verschließt das Gehäuse 12 auf seiner der Kassette 50 zugewandten Seite.

Bei der Ausführungsform nach den Figuren 5 und 7 ist der Auslaß 30 durch eine Berstscheibe 54 verschlossen. Auch bei dieser Ausführungsform sind die Lamellen 20 an ihren radial inneren Enden verdickt und die Schlitze 18 innenseitig entsprechend erweitert. Bei Aktivierung des Gasgenerators sind zunächst durch die Lamellen 20 keine Kammern im Zylinderraum 14 abgegrenzt. Da der Auslaß 30 durch die Berstscheibe 54 verschlossen ist, baut sich im Zylinderraum 14 ein Staudruck auf, der über die Strömungskanäle 22 auch in den erweiterten Druckbeaufschlagungsraum 18b jedes Schlitzes 18 und hinter die Lamellen 20 geleitet wird. Da die druckbeaufschlagte Fläche am inneren Ende jeder Lamelle größer ist als an ihrem radial äußeren Ende, werden die Lamellen nun radial auswärts und in Dichteingriff mit der Wandung des Zylinderraums 14 verlagert. Die Berstscheibe 54 gibt den Auslaß 30 erst frei, wenn im Inneren des Zylinderraums 14 ein ausreichend hoher Druck aufgebaut ist, damit die Lamellen in ihre vollständig ausgefahrene Stellung gelangen. Zu diesem Zeitpunkt wird der Rotor 16 plötzlich in Drehung versetzt, wobei die Lamellen 20 an ihren radial äußeren Enden sowohl durch die radiale Differenzkraft als auch durch die nun zusätzlich wirkenden Fliehkräfte in Dichteingriff mit der Wandung des Zylinderraums 14 gehalten werden.

Wie in Fig. 7 angedeutet ist, kann die Berstplatte 54 aus einem in eine Aussparung 56 des Gehäuses 12 eingesetzten Kunststoffteil bestehen, in das eine Sollbruchlinie 54a eingeprägt ist.

Bei der in Fig. 8 gezeigten Variante der Antriebsvorrichtung ist der Auslaß 30 frei, jedoch ist in der zwischen zwei Lamellen 20d und 20e definierten Kammer ein Füllstück 60 angeordnet, das den Raum dieser Kammer nahezu vollständig einnimmt, so daß der Strömungsweg zum Auslaß 30 hin stark gedrosselt wird. Das Füllstück 60 besteht aus einem deformierbaren Material und wird durch den ansteigenden Druck zum Auslaß 30 befördert. Das Füllstück 60 wirkt in ähnlicher Weise wie die Berstplatte 54 bei der zuvor beschriebenen Ausführungsform und erzeugt nach Aktivierung des Gasgenerators zunächst einen Staudruck, durch den die Lamellen 20 radial auswärts in Dichtungseingriff mit der Wandung des Zylinderraums 14 gedrückt werden.

Fig. 9 zeigt eine einzelne Lamelle 20, deren radial inneres Ende 201 eine Verdickung aufweist, so daß dort eine Fläche 203 entsteht, deren Flächeninhalt größer ist als an der gegenüberliegenden, radial äußeren Endfläche 205. In der Lamelle 20 ist eine Bohrung 207 angeordnet, in die der Scherstift 34 bei der Ausführungsform nach Fig. 3 eingreift.

Bei der in Fig. 9a gezeigten Variante einer Lamelle 20 ist in deren radial äußeres Ende eine Dichtleiste 21 eingesetzt. Diese Dichtleiste 21 besteht aus einem Material, das durch plastische Verformung eine Bedämpfung des Stoßes beim Aufprall der Lamelle an der Wandung des Zylinderraums 14 bewirkt. Ein geeignetes Material ist beispielsweise Aluminium. Durch diese Bedämpfung wird ein Zurückprallen der Lamelle von der Wandung des Zylinderraums 14 vermieden.

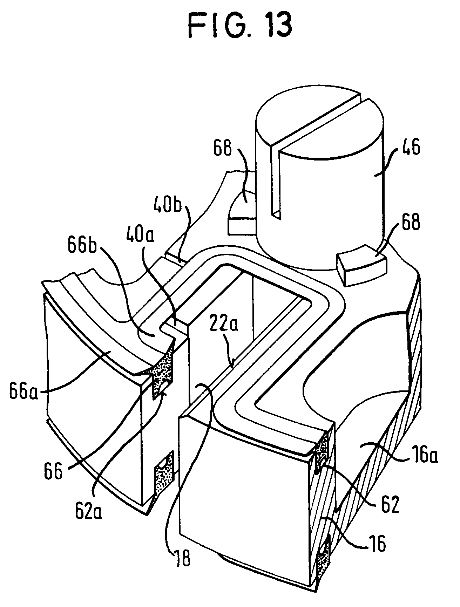

Bei allen beschriebenen Ausführungsformen wird der Rotor 16 auch in axialer Richtung am Gehäuse 12 abgedichtet. Fig. 10 zeigt eine Seitenfläche des Rotors 16 bei einer Ausführungsform analog Fig. 3, jedoch für nur drei Lamellen. In eine durchgehend geschlossene Nut 62 an der Seitenfläche des Rotors 16 ist eine Profildichtung 64 eingelegt, deren Querschnitt aus Fig. 12 ersichtlich ist. Es handelt sich um einen sogenannten Quad-Ring, der im Querschnitt vier unter jeweils 90° zueinander angeordnete Dichtwülste aufweist. Die Nut 62 verläuft entlang dem Außenumfang des Rotors 16 sowie einwärts entlang jedem der Schlitze, um diesen herum und wieder auswärts entlang einer geschlossenen Bahn. Wie aus Fig. 12 ersichtlich ist, steht die Profildichtung 64 geringfügig über die Seitenfläche des Rotors 16 hinaus. Bei geschlossenem Gehäuse 12 steht sie in Dichteingriff mit seinen Seitenplatten.

Zwischen je zwei benachbarten Schlitzen 18 ist der Rotor 16 zur Gewichtsersparnis mit einer tiefen Ausnehmung 16a versehen, wie aus Fig. 11 ersichtlich ist.

Für den Druckausgleich des erweiterten Raumes 18c in jedem der Schlitze 18 zur Ausnehmung 16a hin steht dieser Raum 18c über eine Quernut 40a mit dem Grund der Nut 62 in Verbindung, und von dort führt eine weitere Quernut 40b zur Ausnehmung 16a. Statt eines durch den Rotorkörper hindurch verlaufenden Strömungskanals 22, wie bei der Ausführung nach den Figuren 1 bis 8, ist die hochdruckseitige Begrenzung jedes Schlitzes 18 mit einer Fase 22a versehen, durch die ein Strömungskanal mit gleicher Funktion gebildet wird.

Bei allen Ausführungen mit frei im Gehäuse drehbarem Rotor, der direkt an die Gurtspule des Gurtaufrollers angeschlossen ist, erfolgt die Abdichtung des Rotors in axialer Richtung durch eine Lippendichtung, deren Dichtlippe erst durch den vom Gasgenerator erzeugten Druck in Anlage an den Seitenplatten des Gehäuses gebracht wird. Eine solche Lippendichtung ist beispielshalber in Fig. 13 gezeigt und dort mit 66 bezeichnet. Die Lippendichtung 66 ist wie bei der zuvor beschriebenen Ausführungsform eine Profildichtung, die in eine durchgehend geschlossene Nut 62 an der Seitenfläche des Rotors 16 eingelegt ist. Auf der Niederdruckseite des Schlitzes 18 ist die Nut 62 in einem mit 62a bezeichneten Bereich bis an die Berandung des Schlitzes 18 herangeführt. In diesem Bereich 62a ist die Lippendichtung 66 mit zwei in entgegengesetzte Richtungen weisenden Dichtlippen 66a und 66b versehen. In Fig. 13 gut zu erkennen ist auch die Fase 22a, durch die der Strömungskanal für die Druckbeaufschlagung des Raumes in jedem Schlitz 18 hinter der entsprechenden Lamelle gebildet ist. Ferner sind in Fig. 13 die beiden Quernuten 40a und 40b gezeigt, die am Grund der Nut 62 münden, wodurch die Querschnittsform der Lippendichtung 66 mit zwei beabstandeten Dichtwülsten ein Strömungskanal gebildet ist.

Der Rotor 16 wird durch an seinen Seitenflächen angeformte Abstandsnocken 68 zwischen den Seitenplatten des Gehäuses 12 zentriert. Der Überstand der Abstandsnocken 68 über der Ebene der Seitenfläche des Rotors 16 ist etwas größer als derjenige der Dichtlippen 66a, 66b, so daß diese im Ruhezustand nicht mit den Seitenplatten des Gehäuses in Berührung kommen.

## Patentansprüche

1. Antriebsvorrichtung für einen an der Gurtspule eines Gurtaufrollers (10) angreifenden Gurtstraffer, mit einem seitlich an den Gurtaufroller angebauten Gehäuse (12), in dem ein Zylinderraum (14) gebildet ist, einem exzentrisch in diesem gelagerten, allgemein kreisscheibenförmigen Rotor (16) mit in radialen Schlitzen (18) aufgenommenen Lamellen (20) und einer fahrzeugsensitiv aktivierbaren Druckgasquelle (26) zur Druckbeaufschlagung der zwischen den Lamellen (20), dem Rotor (16) und der Wandung des Gehäuses (12) gebildeten Kammern über einen Einlaß (28), wobei die radialen Schlitze (18) jeweils an ihrem inneren Ende durch einen Strömungskanal (22) mit einer in Drehrichtung des Rotors (16) vor der entsprechenden Lamelle (18) gelegenen Kammer verbunden sind, der Rotor (16) durch eine Kupplung (36) an die Gurtspule ankoppelbar ist, dadurch gekennzeichnet, daß diejenige der Lamellen (20a), welche die einlaßseitige Kammer (32) in Drehrichtung des Rotors (16) an ihrem vorderen Ende abschließt, durch ein erst bei wesentlich angestiegenem Druck nachgebendes Haltemittel (34) an ihrem radial äußeren Ende in Dichteingriff mit der Wandung des Gehäuses (12) gehalten wird.

2. Antriebsvorrichtung nach Anspruch 1, dadurch gekennzeichnet, daß das Haltemittel durch wenigstens einen Scherstift (34) gebildet ist.

3. Antriebsvorrichtung nach einem der Ansprüche 1 bis 2, dadurch gekennzeichnet, daß der Rotor (16) an seinen axialen Enden gegen die Seitenwände des Gehäuses (12) durch je wenigstens eine in eine Nut (62) des Rotors eingelegte Profildichtung (64) abgedichtet ist.

4. Antriebsvorrichtung nach Anspruch 3, dadurch gekennzeichnet, daß die Nut (62) jeweils in der axialen Endfläche des Rotors geschlossen und durchgehend entlang dem Außenumfang des Rotors (16) sowie entlang der Berandung jedes Schlitzes ein- und wieder auswärts geführt ist.

5. Antriebsvorrichtung nach Anspruch 3 oder 4, dadurch gekennzeichnet, daß die Profildichtung (64) im Querschnitt vier unter jeweils 90° zueinander angeordnete Dichtwülste aufweist.

6. Antriebsvorrichtung nach Anspruch 4 oder 5, dadurch gekennzeichnet, daß die Profildichtung auf der druckbeaufschlagten Seite der Lamellen (20) bis an diese heranreicht und an ihnen abdichtet.

7. Antriebsvorrichtung für einen an der Gurtspule eines Gurtaufrollers (10) angreifenden Gurtstraffer, mit einem seitlich an den Gurtaufroller angebauten Gehäuse (12), in dem ein Zylinderraum (14) gebildet ist, einem exzentrisch in diesem gelagerten, allgemein kreisscheibenförmigern Rotor (16) mit in radialen Schlitzen (18) aufgenommenen Lamellen (20) und einer fahrzeugsensitiv aktivierbaren Druckgasquelle (26) zur Druckbeaufschlagung der zwischen den Lamellen (20), dem Rotor (16) und der Wandung des Gehäuses (12) gebildeten Kammern über einen Einlaß (28), wobei die radialen Schlitze (18) jeweils an ihrem inneren Ende durch einen Strömungskanal (22) mit einer in Drehrichtung des Rotors (16) vor der entsprechenden Lamelle (18) gelegenen Kammer verbunden sind, der Rotor (16) mit der Gurtspule drehfest gekoppelt ist, die Lamellen (20) an ihrem radial inneren Ende jeweils eine größere durch den Gasdruck beaufschlagbare Fläche (203) als an ihrem radial äußeren Ende aufweisen, dadurch gekennzeichnet, daß im Strömungsweg zwischen dem Einlaß (28) und dem diesem annähernd diametral gegenüberliegenden Auslaß (30) im Gehäuse ein Staukörper (54; 60) angeordnet ist, der erst bei wesentlich angestiegenem Druck nachgibt und den Strömungsweg freigibt.

8. Antriebsvorrichtung nach Anspruch 7, dadurch gekennzeichnet, daß der Staukörper durch eine den Auslaß (30) verschließende Berstscheibe (54) gebildet ist.

9. Antriebsvorrichtung nach Anspruch 7, dadurch gekennzeichnet, daß der Staukörper durch wenigstens ein Füllteil (60) aus einem verformbaren Material in derjenigen Kammer, die in Drehrichtung des Rotors hinter der dem Einlaß (28) benachbarten Kammer liegt, gebildet ist.

10. Antriebsvorrichtung nach einem der Ansprüche 7 bis 9, dadurch gekennzeichnet, daß die Lamellen (20) im Ruhezustand radial in die Schlitze (18) eingezogen sind und über den Außenumfang des Rotors (16) nicht hinausstehen.

11. Antriebsvorrichtung nach Anspruch 10, dadurch gekennzeichnet, daß die Lamellen (20) in der eingezogenen Stellung am Rotor (16) lösbar festgelegt sind.

12. Antriebsvorrichtung nach einem der Ansprüche 7 bis 11, dadurch gekennzeichnet, daß der Rotor (16) an seinen axialen Enden gegen die Seitenwände des Gehäuses (12) durch Lippendichtungen, die erst bei Druckbeaufschlagung mit den Flächen der Seitenwände in Berührung gelangen, abgedichtet ist.

13. Antriebsvorrichtung nach einem der vorstehenden Ansprüche, dadurch gekennzeichnet, daß der Strömungskanal durch eine Fase (22a) entlang der hochdruckseitigen Berandung jedes Schlitzes (18) gebildet ist.

14. Antriebsvorrichtung nach einem der vorstehenden Ansprüche, dadurch gekennzeichnet, daß die Lamellen (20) jeweils an ihrem radial äußeren Ende eine eingesetzte Dichtleiste (21) aufweisen.

15. Antriebsvorrichtung nach Anspruch 14, dadurch gekennzeichnet, daß die Dichtleisten (21) aus einem Werkstoff bestehen, der das Anstoßen der Lamellen (20) an der Wandung des Zylinderraumes (14) durch plastische Verformung bedämpft.

## Claims

1. A drive device for a belt pretensioner adapted to act on the belt drum of a belt retractor (10), comprising a housing (12) fitted laterally to the belt retractor and in which a cylinder space (14) is formed, a generally circular disk-like rotor (16) eccentrically supported in such cylinder space and having lamellas (20) arranged in radial slots (18), and a compressed gas source (26) adapted to be activated in a vehicle-responsive manner for pressurizing via an inlet (28) chambers formed between the lamellas (20), the rotor (16) and the wall of the housing (12), the radial slots (18) being respectively connected at inner ends thereof by a flow duct (22) with a chamber placed in the direction of the rotation of the rotor (16) before the respective lamella (18), the rotor (16) being adapted to be coupled with the belt drum by means of a coupling (36), characterized in that one of the lamellas (20a), which terminates the inlet side chamber (32) at its front end in the direction of rotation of the rotor (16), is held in sealing engagement with the wall of the housing (12) by holding means (34) only yielding at a substantially increased pressure.

2. The drive device as claimed in claim 1, characterized in that the holding means is formed of at least one shear pin (34).

3. The drive device as claimed in any one of the claims 1 through 2, characterized in that the rotor (16) is sealed with its axial ends against the side walls of the housing (12) by means of respectively at least one profiled seal (64) placed in a groove (62) in the rotor.

4. The drive device as claimed in claim 3, characterized in that the groove (62) respectively extends in the axial terminal surface of the rotor running along a complete loop along the outer periphery of the rotor (16) and furthermore along the edge of each slot inward and then outward again.

5. The drive device as claimed in claim 3 or 4, characterized in that the profiled seal (64) has in cross section four sealing beads arranged with a spacing of respectively 90° between them.

6. The drive device as claimed in claim 4 or 5, characterized in that the profiled seal on the pressurized side of the lamellas (20) extends as far as same and produces a seal on them.

7. A drive device for a belt pretensioner adapted to act on the belt drum of a belt retractor (10), comprising a housing (12) fitted laterally to the belt retractor and in which a cylinder space (14) is formed, a generally circular disk-like rotor (16) supported in such cylinder space and having lamellas (20) arranged in radial slots (18), and a compressed gas source (26) adapted to be activated in a vehicle-responsive manner for pressurizing via an inlet (28) chambers formed between the lamellas (20), the rotor (16) and the wall of the housing (12), the radial slots (18) being respectively connected at inner ends thereof by a flow duct (22) with a chamber placed in the direction of the rotation of the rotor (16) before the respective lamella (18), the rotor (16) being coupled with the belt drum in a manner as to prevent relative rotation, the lamellas (20) respectively having a larger area (203) able to be acted upon by the gas pressure at radially inner ends than at radially outer ends thereof, characterized in that an obstructing body (54; 60) is arranged in the flow path between the inlet (28) and the outlet (30) located generally diametrically opposite to the inlet, such obstructing body only yielding and clearing the flow path upon a substantial pressure increase.

8. The drive device as claimed in claim 7, characterized in that the obstructing body is constituted by a bursting disk (54) closing the outlet (30).

9. The drive device as claimed in claim 7, characterized in that the obstructing body is constituted by at least one filling member (60) of a deformable material in that chamber, which in the direction of rotation of the rotor is arranged behind the chamber adjacent to the inlet (28).

10. The drive device as claimed in any one of the claims 7 through 9, characterized in that in the resting state the lamellas (20) are retracted radially into the slots (18) and do not protrude over the outer periphery of the rotor (16).

11. The drive device as claimed in claim 10, characterized in that the lamellas (20) are detachably secured to the rotor (16) in the retracted position.

12. The drive device as claimed in any one of the claims 7 through 11, characterized in that the rotor (16) is sealed with its axial ends against the side walls of the housing (12) by lip seals adapted only to make contact with the surface of the side walls on pressurization.

13. The drive device as claimed in any one of the preceding claims, characterized in that the flow duct is formed by a chamfer (22a) along the high pressure side edge of each slot (18).

14. The drive device as claimed in any one of the preceding claims, characterized in that the lamellas (20) respectively have a sealing strip (21) inserted at the radially outer end of the respective lamella.

15. The drive device as claimed in claim 14, characterized in that the sealing strips (21) consist of a material adapted to damp abutment of the lamellas (20) against the wall of the cylinder space (14) by plastic deformation.

## Revendications

1. Dispositif d'entraînement pour un tendeur de ceinture venant en prise sur la bobine d'un enrouleur de ceinture (10), comprenant un boîtier (12) monté latéralement sur l'enrouleur de ceinture, dans lequel est constitué un espace cylindrique (14), un rotor (16) ayant de façon générale la forme d'un disque circulaire, et monté de façon excentrée dans cet espace cylindrique, avec des lamelles (20), logées dans des fentes radiales (18), et une source de gaz comprimé (26) qui peut être activée en fonction de mouvements du véhicule pour alimenter en pression les chambres formées entre les lamelles (20), le rotor (16) et la paroi du boîtier (12) par l'intermédiaire d'un orifice d'entrée (28), les fentes radiales (18) étant reliées respectivement à leur extrémité intérieure par un canal d'écoulement (22) à une chambre placée dans le sens de rotation du rotor (16) avant la lamelle correspondante (18), le rotor (16) pouvant être accouplé par un accouplement (36) à la bobine de la ceinture, caractérisé en ce que celle des lamelles (20a), qui ferme la chambre (32) située du côté de l'orifice d'entrée dans le sens de rotation du rotor (16) à son extrémité avant, est maintenue par un moyen de fixation (34), qui ne se relâche que sous une pression sensiblement accrue, à son extrémité radialement extérieure en prise étroite avec la paroi du boîtier (12).

2. Dispositif d'entraînement selon la revendication 1, caractérise en ce que le moyen de fixation est constitué par au moins un goujon de cisaillement (34).

3. Dispositif d'entraînement selon l'une des revendications 1 et 2, caractérisé en ce qu'on assure l'étanchéité du rotor (16) à chacune de ses extrémités axiales par rapport aux parois latérales du boîtier (12) par au moins un joint d'étanchéité profilé (64) inséré dans une rainure (62) du rotor.

4. Dispositif d'entraînement selon la revendication 3, caractérisé en ce que la rainure (62) est fermée respectivement dans la face terminale axiale du rotor et en ce qu'on la fait passer le long du pourtour extérieur du rotor (16) ainsi que le long de la bordure de chaque fente vers l'intérieur et de nouveau vers l'extérieur.

5. Dispositif d'entraînement selon la revendication 3 ou 4, caractérisé en ce que le joint d'étanchéité profilé (64) présente en section transversale quatre bourrelets d'étanchéité, disposés respectivement à 90° les uns par rapport aux autres.

6. Dispositif d'entraînement selon la revendication 4 ou 5, caractérisé en ce que le joint d'étanchéité profilé s'étend sur le côté alimenté en pression des lamelles (20) jusqu'à celui-ci et assure l'étanchéité sur les lamelles.

7. Dispositif d'entraînement pour un tendeur de ceinture venant en prise sur la bobine d'un enrouleur de ceinture (10), comprenant un boîtier (12) monté latéralement sur l'enrouleur de ceinture, dans lequel est constitué un espace cylindrique (14), un rotor (16) ayant de façon générale la forme d'un disque circulaire, et monté de façon excentrée dans cet espace cylindrique, avec des lamelles (20), logées dans des fentes radiales (18), et une source de gaz comprimé (26) qui peut être activée en fonction de mouvements du véhicule pour alimenter en pression les chambres formées entre les lamelles (20), le rotor (16) et la paroi du boîtier (12) par l'intermédiaire d'un orifice d'entrée (28), les fentes radiales (18) étant reliées respectivement à leur extrémité intérieure par un canal d'écoulement (22) à une chambre placée dans le sens de rotation du rotor (16) avant la lamelle correspondante (18), le rotor (16) étant accouplé à la bobine de la ceinture de façon solidaire en rotation, les lamelles (20) présentant à leur extrémité radialement intérieure respectivement une surface (203) pouvant être sollicitée par le gaz comprimé plus grande qu'à leur extrémité radialement extérieure, caractérisé en ce que sur le trajet d'écoulement entre l'orifice d'entrée (28) et l'orifice de sortie (30), qui se trouve à peu près diamétralement en face de celui-ci, on dispose dans le boîtier un corps de retenue (54; 60), qui ne se relâche que dans le cas d'une pression sensiblement accrue et libère le trajet d'écoulement.

8. Dispositif d'entraînement selon la revendication 7, caractérisé en ce que le corps de retenue est constitué par un disque de rupture (54) qui ferme l'orifice de sortie (30).

9. Dispositif d'entraînement selon la revendication 7, caractérisé en ce que le corps de retenue est formé par au moins une pièce intercalaire (60) en une matière déformable dans la chambre qui se trouve derrière la chambre voisine de l'orifice d'entrée (28) dans le sens de rotation du rotor.

10. Dispositif d'entraînement selon l'une des revendications 7 à 9, caractérisé en ce que les lamelles (20) sont en position de repos insérées radialement dans la fente (18) et ne peuvent pas saillir sur le pourtour extérieur du rotor (16).

11. Dispositif d'entraînement selon la revendication 10, caractérisé en ce que les lamelles (20) sont fixées, dans leur position d'insertion, de façon amovible sur le rotor (16).

12. Dispositif d'entraînement selon l'une des revendications 7 à 11, caractérisé en ce que l'on assure l'étanchéité du rotor (16) à ses extrémités axiales par rapport aux parois latérales du boîtier (12) par des joints d'étanchéité à lèvres, qui ne viennent en contact avec les surfaces des parois latérales que lors de la mise en pression.

13. Dispositif d'entraînement selon l'une des revendications précédentes, caractérisé en ce que le canal d'écoulement est constitué par un chanfrein (22a) le long de la bordure de chaque fente (18), qui est située du côté haute pression.

14. Dispositif d'entraînement selon l'une des revendications précédentes, caractérisé en ce que les lamelles (20) présentent respectivement à leur extrémité radialement extérieure une languette d'étanchéité insérée (21).

15. Dispositif d'entraînement selon la revendication 14, caractérisé en ce que les languettes d'étanchéité (21) consistent en une matière qui amortit la venue en contact des lamelles (20) sur la paroi de la chambre cylindrique (14) par déformation plastique.
